# EUROPÄISCHE PATENTSCHRIFT

(11) **EP 3 313 715 B1**
(45) Veröffentlichungstag und Bekanntmachung des Hinweises auf die Patenterteilung: **26.02.2020**
(21) Anmeldenummer: 16733322.8
(22) Anmeldetag: 15.06.2016
(51) Int. Cl.: B62D 25/08

(54) **ABSTÜTZEINRICHTUNG FÜR EINEN VORDERWAGEN EINES PERSONENKRAFTFAHRZEUGS**
SUPPORT DEVICE FOR A FRONT END OF A PASSENGER MOTOR VEHICLE
DISPOSITIF D'APPUI D'UN CHÂSSIS AVANT DE VÉHICULE DE TOURISME

(30) Priorität: 23.06.2015 DE 102015211544
(43) Veröffentlichungstag der Anmeldung: 02.05.2018
(73) Patentinhaber: Bayerische Motoren Werke Aktiengesellschaft, 80809 München (DE)
(72) Erfinder: AKIF, Öztzan, 80937 München (DE); FICHTINGER, Gerhard, 85630 Grasbrunn (DE); RIEDL,Wilhelm, 85276 Pfaffenhofen (DE); SCHUSTER, Horst, 82140 Olching (DE)
(86) Internationale Anmeldenummer: PCT/EP2016/063680
(87) Internationale Veröffentlichungsnummer: WO 2016/207038

(56) Entgegenhaltungen:
- EP-A1- 2 647 551
- EP-A1- 2 719 565
- US-A1- 2014 354 008
- US-A1- 2014 367 985

## Beschreibung

Die Erfindung betrifft eine Abstützeinrichtung für einen Vorderwagen eines Personenkraftfahrzeugs.

Eine Frontalkollision, bei welcher ein Personenkraftfahrzeugs mit geringer Breitenüberdeckung mit einem Unfallpartner oder einem Hindernis kollidiert, wird auch als Small-Overlap-Crash bezeichnet. Dabei trifft der Unfallpartner beziehungsweise die Barriere zumindest im Wesentlichen gerade, das heißt in Fahrzeuglängsrichtung auf die Front und somit den Vorderwagen des Personenkraftfahrzeugs. Ferner können Kollisionen auftreten, bei denen der Unfallpartner beziehungsweise die Barriere von schräg vorne auf den Vorderwagen des Personenkraftfahrzeugs prallt. Ein solcher Aufprall eines Unfallpartners oder eines Hindernisses von schräg vorne auf den Vorderwagen eines Personenkraftfahrzeugs wird auch als Oblique-Crash oder Frontal-Oblique-Crash bezeichnet. Derartige Frontalkollisionen stellen für den Vorderwagen eines Personenkraftfahrzeugs eine große Herausforderung dar. Hierbei stellt sich bekanntermaßen die Problematik, dass das Personenkraftfahrzeug im Bereich seines Vorderwagens außenseitig eines jeweiligen Hauptlängsträgers durch eine Unfallkraft beaufschlagt wird.

Aus der US 2014/0062106 A1 ist bereits eine Abstützeinrichtung für einen Vorderwagen eines Personenkraftfahrzeugs bekannt.

Aufgabe der vorliegenden Erfindung ist es daher, eine Abstützeinrichtung für einen Vorderwagen eines Personenkraftfahrzeugs zu schaffen, mittels welcher sich ein besonders vorteilhaftes Unfallverhalten des Personenkraftfahrzeugs realisieren lässt.

Diese Aufgabe wird erfindungsgemäß durch eine Abstützeinrichtung mit den Merkmalen des Patentanspruchs 1 gelöst. Vorteilhafte Ausgestaltungen der Erfindung sind Gegenstand der abhängigen Ansprüche.

Die erfindungsgemäße Abstützeinrichtung für einen Vorderwagen eines Personenkraftwagens weist wenigstens ein sich zumindest im Wesentlichen in Fahrzeughochrichtung erstreckendes Karosseriebauteil auf, über welches jeweilige, seitlich zugeordnete Längsträgerelemente entsprechender Längsträgerebenen miteinander verbunden sind.

Die Längsträgerebenen und somit die zugeordneten Längsträgerelemente sind dabei in Fahrzeughochrichtung übereinander beziehungsweise aufeinanderfolgend angeordnet. Die Abstützeinrichtung weist ferner einen Querträger eines an der Karosserie des Personenkraftfahrzeugs gehaltenen Frontendmoduls auf. Im Gegensatz zum Karosseriebauteil ist der Querträger somit nicht Bestandteil der Karosserie des Personenkraftfahrzeugs oder an der Karosserie, sondern der Querträger ist Bestandteil des Frontendmoduls, welches mit der Karosserie gefügt ist. Dabei ist der Querträger beispielsweise Bestandteil eines Stoßfängers und wird auch als Biegequerträger bezeichnet.

Die Abstützeinrichtung umfasst darüber hinaus wenigstens ein an dem Karosseriebauteil auf einer in Fahrzeugquerrichtung nach außen weisenden Seite vorgesehenes und eine Aufnahme aufweisendes, erstes Abstützelement sowie zumindest ein in Fahrzeugquerrichtung außerhalb des Karosseriebauteils angeordnetes, am Querträger vorgesehenes und sich von dem Querträger nach hinten erstreckendes, zweites Abstützelement. Das zweite Abstützelement ist in einem Ausgangszustand der Abstützeinrichtung, in welchem die Abstützeinrichtung nicht unfallbedingt verformt ist, von dem ersten Abstützelement beabstandet und infolge einer entsprechenden unfallbedingten Kraftbeaufschlagung zumindest teilweise in die Aufnahme und dadurch in Abstützung mit dem ersten Abstützelement bewegbar.

Übersteigt beispielsweise die unfallbedingte Kraftbeaufschlagung der Abstützeinrichtung bei einer Frontalkollision wie beispielsweise einem Small-Overlap-Crash oder einem Oblique-Crash ein vorgebbares Belastungsniveau, so kommt es zu einer unfallbedingten Rückverlagerung des Querträgers, da dieser unfallbedingte Last beziehungsweise Unfallenergie aufnimmt. Infolge dieser unfallbedingten Rückverlagerung werden der Querträger und das am Querträger angeordnete, zweite Abstützelement in Fahrzeuglängsrichtung nach hinten und somit in Richtung des Karosseriebauteils und des an diesem gehaltenen ersten Abstützelements bewegt. Dadurch wird der im Ausgangszustand vorgesehene Abstand zwischen den Abstützelementen aufgehoben, und das zweite Abstützelement wird zumindest mittelbar am ersten Abstützelement abgestützt.

Hierdurch resultiert aus der unfallbedingten Kraftbeaufschlagung wenigstens eine zumindest im Wesentlichen in Fahrzeugquerrichtung verlaufende und auf den Vorderwagen wirkende Querkraftkomponente, mittels welcher das Personenkraftfahrzeug beispielsweise um die Fahrzeughochrichtung um den Unfallpartner beziehungsweise das Hindernis gedreht wird. Hierdurch können übermäßige Intrusionen in die Fahrgastzelle des Personenkraftfahrzeugs vermieden werden, sodass die Insassen des Personenkraftfahrzeugs geschützt werden können. Die Abstützeinrichtung und insbesondere die Abstützelemente kommen somit insbesondere bei einem Small-Overlap-Crash und bei einem Oblique-Crash zur Wirkung. Da die Abstützelemente jedoch im Ausgangszustand voneinander beabstandet und somit nicht aneinander abgestützt sind, beeinträchtigen die Abstützelemente andere Unfallsituationen, das heißt Unfallsituationen, welche sich von einem Small-Overlap-Crash und einem Oblique-Crash unterscheiden, nicht, sodass auch ein vorteilhaftes Unfallverhalten bei solchen anderen Unfallsituationen wie beispielsweise einer Frontalkollision mit hoher Breitenüberdeckung oder voller Breitenüberdeckung realisiert werden kann.

Da die Abstützelemente in Fahrzeugquerrichtung seitlich außerhalb des Karosseriebauteils und somit der jeweiligen Längsträger angeordnet sind, kommt die Wirkung der Abstützeinrichtung insbesondere bei einem Small-Overlap-Crash und einem Oblique-Crash zum Tragen, da dann die Abstützelemente in gegenseitiger Abstützung kommen und sich beispielsweise verkeilen. Dadurch kann eine Querkraftabstützung realisiert werden, sodass das Personenkraftfahrzeug zum Schutz der Insassen um den Unfallpartner beziehungsweise das Hindernis gedreht wird.

Dabei weist das zweite Abstützelement einen in dem Ausgangszustand in der Aufnahme angeordneten ersten Längenbereich und einen sich an den ersten Längenbereich anschließenden und in dem Ausgangszustand außerhalb der Aufnahme angeordneten zweiten Längenbereich auf, welcher infolge der unfallbedingten Kraftbeaufschlagung in die Aufnahme bewegbar ist. Mit anderen Worten befindet sich das zweite Abstützelement, das heißt der erste Längenbereich, bereits im Ausgangszustand in der Aufnahme, wobei bei einer Frontalkollision auch der zweite Längenbereich in die Aufnahme bewegt wird. Hierdurch ist es möglich, dass sich die Abstützelemente bei der unfallbedingten Kraftbeaufschlagung besonders vorteilhaft verkeilen und so eine gewünschte Abstützfunktion realisieren.

In weiterer Ausgestaltung der Erfindung hat es sich als vorteilhaft gezeigt, wenn sich das zweite Abstützelement in Fahrzeuglängsrichtung von vorne außen nach hinten innen erstreckt. Dies bedeutet, dass das zweite Abstützelement schräg zur Fahrzeuglängsrichtung verläuft, wobei das vordere Ende des zweiten Abstützelements in Fahrzeugquerrichtung weiter außen als das hintere Ende angeordnet ist. Hierdurch ist es auf besonders vorteilhafte Weise möglich, eine Querkraftkomponente beziehungsweise eine Querkraftabstützung zu realisieren, um eine besonders vorteilhafte Bewegung des Personenkraftfahrzeugs insgesamt zu erreichen.

Zur Realisierung eines besonders vorteilhaften Unfallverhaltens ist es bei einer weiteren Ausführungsform der Erfindung vorgesehen, dass sich das erste Abstützelement schräg zur Fahrzeuglängsrichtung erstreckt. Durch diesen schrägen Verlauf kann auf besonders vorteilhafte Weise eine Querkraftkomponente bei einem Unfall erzeugt werden, sodass das Personenkraftfahrzeug beispielsweise um den Unfallpartner beziehungsweise das Hindernis gedreht werden kann.

Um die Teileanzahl und den Montageaufwand der Abstützeinrichtung besonders gering zu halten, ist es bei einer Ausführungsform der Erfindung vorgesehen, dass das erste Abstützelement einstückig an dem Karosseriebauteil ausgebildet ist. Hierdurch kann beispielsweise auch ein besonders vorteilhafter Kraftpfad ausgebildet werden, was dem Unfallverhalten zugutekommt.

Alternativ dazu ist es denkbar, dass das erste Abstützelement als separat von dem Karosseriebauteil ausgebildetes und am Karosseriebauteil befestigtes Bauelement ausgebildet ist. Mit anderen Worten ist dann das erste Abstützelement ein Zusatzteil, welches bedarfsgerecht am Karosseriebauteil montiert werden kann.

Eine weitere vorteilhafte Ausführungsform sieht vor, dass das zweite Abstützelement einstückig mit dem Querträger ausgebildet ist, um dadurch einen vorteilhaften Kraftpfad zu realisieren.

Alternativ dazu ist es denkbar, dass das zweite Abstützelement als separat von dem Querträger ausgebildetes und am Querträger befestigtes Bauelement ausgebildet ist. Hierbei handelt es sich bei dem zweiten Abstützelement um ein Zusatzbauteil, mit dem der Querträger bedarfsgerecht ausgestattet werden kann.

Schließlich hat es sich als vorteilhaft gezeigt, wenn wenigstens eines der Abstützelemente, das heißt das erste Abstützelement und/oder das zweite Abstützelement als Hohlprofil ausgebildet ist. Hierdurch kann eine besonders vorteilhafte Steifigkeit des wenigstens einen Abstützelements realisiert werden, sodass eine besonders vorteilhafte Querkraftabstützung ermöglicht werden kann.

Zur Erfindung gehört auch ein Personenkraftfahrzeug mit wenigstens einer erfindungsgemäßen Abstützeinrichtung. Vorteile und vorteilhafte Ausführungsformen der erfindungsgemäßen Abstützeinrichtung sind als Vorteile und vorteilhafte Ausführungsformen des erfindungsgemäßen Personenkraftfahrzeugs anzusehen und umgekehrt.

Weitere Einzelheiten der Erfindung ergeben sich aus der nachfolgenden Beschreibung eines bevorzugten Ausführungsbeispiels und den zugehörigen Zeichnungen.

Dabei zeigen:
- Fig. 1: eine schematische und perspektivische Vorderansicht auf eine Vorderwagenstruktur eines Personenkraftfahrzeugs, welche zwei seitliche, sich zumindest im Wesentlichen in Fahrzeughochrichtung erstreckende Karosseriebauteile, über welche jeweilige, seitlich zugeordnete Längsträgerelemente entsprechender Längsträgerebene miteinander verbunden sind, sowie jeweilige, an den Karosseriebauteilen angeordnete erste Abstützelemente einer Abstützeinrichtung für einen Vorderwagen des Personenkraftfahrzeugs umfasst;
- Fig. 2: eine schematische Seitenansicht auf eines der Karosseriebauteile;
- Fig. 3: eine schematische Seitensicht auf die Vorderwagenstruktur mit einem an der Vorderwagenstruktur gehaltenen Vorderachsträger;
- Fig. 4: ausschnittsweise eine schematische und perspektivische Vorderansicht auf ein mit der Karosserie des Personenkraftwagens gefügtes Frontendmodul, welches einen Querträger eines Stoßfängers umfasst, wobei an dem Querträger jeweilige, mit den ersten Abstützelementen korrespondierende, zweite Abstützelemente befestigt sind;
- Fig. 5: ausschnittsweise eine schematische Seitenansicht auf die Abstützeinrichtung;
- Fig. 6: ausschnittsweise eine schematische Draufsicht auf die Abstützeinrichtung; und
- Fig. 7: ausschnittsweise eine schematische und geschnittene Seitenansicht auf die Abstützeinrichtung.

In den Fig. sind gleiche oder funktionsgleiche Elemente mit gleichen Bezugszeichen versehen.

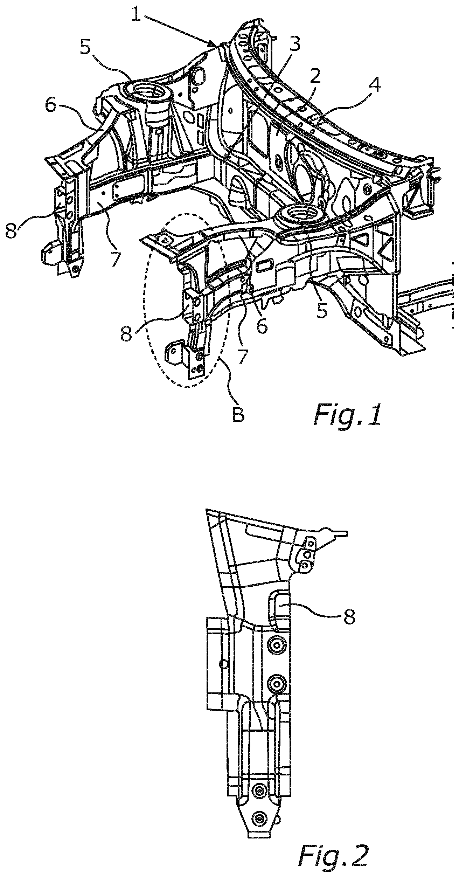

Fig. 1 zeigt in einer schematischen und perspektivischen Vorderansicht eine Vorderwagenstruktur 1 für einen Vorderwagen eines Personenkraftfahrzeugs. Die Vorderwagenstruktur 1 umfasst eine Trennwand 2, welche auch als Spritzwand bezeichnet wird. Im fertig hergestellten Zustand des Personenkraftfahrzeugs ist durch die Trennwand 2 der Innenraum des Personenkraftfahrzeugs von einem in Fahrzeuglängsrichtung vor dem Innenraum angeordneten Motorraum 3 abgetrennt. Im Motorraum 3 ist wenigstens ein Antriebsaggregat zum Antreiben des Personenkraftfahrzeugs anordenbar. Ferner umfasst die Vorderwagenstruktur 1 einen Windschutzscheiben-Querträger 4, an welchem eine Windschutzscheibe des Personenkraftfahrzeugs befestigbar ist. Der Windschutzscheiben-Querträger 4 schließt sich dabei in Fahrzeughochrichtung nach oben an die Trennwand 2 an.

Die Vorderwagenstruktur 1 umfasst ferner Domelemente 5, welche auch als Federbeindome bezeichnet werden. An den Domelementen 5 sind Feder- und/oder Dämpferelemente, insbesondere Federbeine, eines Fahrwerks des Personenkraftfahrzeugs abstützbar. Außerdem umfasst die Vorderwagenstruktur 1 seitliche, obere Längsträgerelemente 6 einer oberen Längsträgerebene. Die oberen Längsträgerelemente 6 sind Stützträger, welche auch als Radhaus-Stützträger bezeichnet werden. Des Weiteren umfasst die Vorderwagenstruktur 1 Längsträgerelemente 7 einer zweiten Längsträgerebene. Die Vorderwagenstruktur 1 ist Teil der Karosserie des Personenkraftfahrzeugs, sodass die Längsträgerelemente 6 und 7 Karosseriebauteile sind. Schließlich umfasst die Vorderwagenstruktur 1 weitere Karosseriebauteile 8, welche sich zumindest im Wesentlichen in Fahrzeughochrichtung (z-Richtung) erstrecken. Da sich die Karosseriebauteile 8 zumindest im Wesentlichen in Fahrzeughochrichtung erstrecken, werden sie auch als Türme, Karosserietürme oder Tower bezeichnet. Aus Fig. 1 ist erkennbar, dass die oberen Längsträgerelemente 6 einerseits an die Domelemente 5 und andererseits an die Karosseriebauteile 8 angebunden sind. Auch die Längsträgerelemente 7 sind an die Karosseriebauteile 8 angebunden, sodass die Längsträgerelemente 6 und 7 und somit die jeweiligen, zugehörigen Längsträgerebenen über die Karosseriebauteile 8 miteinander verbunden sind. Die Längsträgerelemente 7 sind beispielsweise Motorträger, an denen im fertig hergestellten Zustand des Personenkraftfahrzeugs das zuvor genannte Antriebsaggregat gelagert ist. Alternativ oder zusätzlich sind im fertig hergestellten Zustand des Personenkraftfahrzeugs an dem Vorderachsträger 9 beispielsweise Radlenker zum Führen von Rädern, insbesondere Vorderrädern, des Personenkraftfahrzeugs gelenkig angebunden.

Fig. 2 zeigt in einer schematischen Seitenansicht eines der Karosseriebauteile 8. Bei dem in Fig. 2 gezeigten Karosseriebauteil 8 handelt es sich beispielsweise um das bezogen in Vorwärtsfahrtrichtung linke Karosseriebauteil 8, welches in einem in Fig. 1 mit B bezeichneten Bereich angeordnet ist.

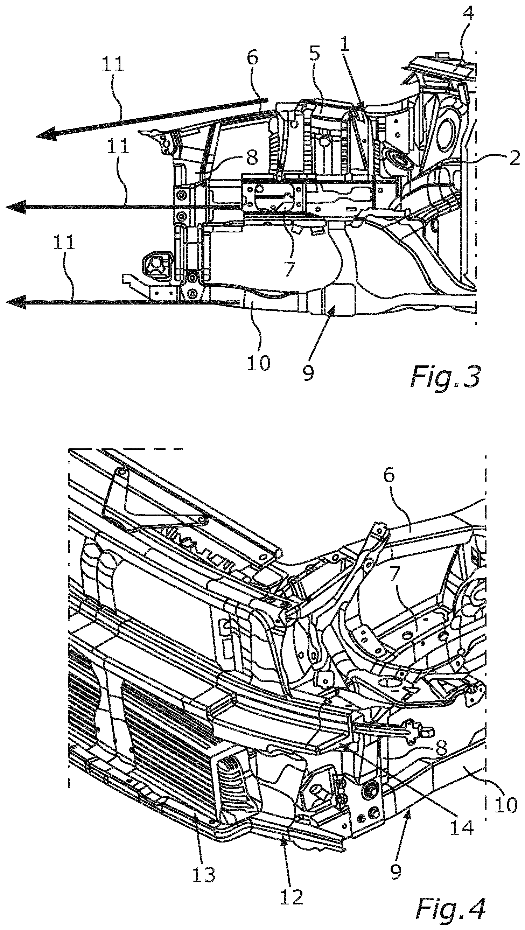

Fig. 3 zeigt die Vorderwagenstruktur 1 in einer schematischen Seitenansicht. An der Vorderwagenstruktur 1 ist ein Vorderachsträger 9 befestigt. Beispielsweise ist der Vorderachsträger 9 nicht Bestandteil der Karosserie und auch nicht Bestandteil der Vorderwagenstruktur 1, sondern ein Anbauteil, welches zumindest mit der Vorderwagenstruktur 1 gefügt ist.

Der Vorderachsträger 9 umfasst beispielsweise zwei in Fahrzeugquerrichtung voneinander beabstandete Längsträgerelemente einer unteren Längsträgerebene, wobei von den Längsträgerelementen des Vorderachsträgers 9 das bezogen auf die Vorwärtsfahrtrichtung linke Längsträgerelement erkennbar und mit 10 bezeichnet ist. Die Längsträgerebene der Längsträgerelemente 6 ist somit eine obere Längsträgerebene, wobei die Längsträgerebene der Längsträgerelemente 10 eine untere Längsträgerebene ist. Die Längsträgerelemente 6, 7 und 10 sind in Fahrzeughochrichtung übereinander beziehungsweise aufeinanderfolgend angeordnet, sodass auch die jeweiligen Längsträgerebenen in Fahrzeughochrichtung übereinander angeordnet beziehungsweise aufeinanderfolgend angeordnet sind. Die Längsträgerebene der Längsträgerelemente 7 ist somit in Fahrzeughochrichtung zwischen der oberen Längsträgerebene und der unteren Längsträgerebene angeordnet, da die Längsträgerelemente 7 zwischen den oberen Längsträgerelementen 6 und unteren Längsträgerelementen 10 angeordnet sind.

Aus Fig. 3 ist erkennbar, dass auch die Längsträgerelemente 10 der unteren Längsträgerebene beziehungsweise des Vorderachsträgers 9 an die Karosseriebauteile 8 angebunden sind, sodass die seitlichen Längsträgerelemente 6, 7 und 10 über das jeweilige, seitliche Karosseriebauteil 8 miteinander verbunden sind. Mit anderen Worten erstreckt sich beispielsweise das jeweilige Karosseriebauteil 8 zumindest im Wesentlichen in Fahrzeughochrichtung von der oberen Längsträgerebene über die mittlere Längsträgerebene bis zur unteren Längsträgerebene beziehungsweise umgekehrt.

In Fig. 3 ist durch Richtungspfeile 11 veranschaulicht, dass sich über das jeweilige Längsträgerelement 6, 7 beziehungsweise 10 ein jeweiliger Lastpfad ausbilden kann, welcher auch als Strukturpfad bezeichnet wird. Über diesen Lastpfad können beispielsweise unfallbedingte Kräfte aufgenommen und abgeleitet werden. Über die Strukturpfade können unfallbedingte Lasten, das heißt Unfallenergie, in die Karosserie eingeleitet werden, sodass die Strukturpfade auch als Karosseriepfade oder Karosserielastpfade bezeichnet werden. Somit ist das jeweilige Karosseriebauteil 8 ein Strukturbauteil, welches die drei Karosserielastpfade verbindet.

Fig. 4 zeigt in einer schematischen und perspektivischen Vorderansicht ein Frontendmodul 12 des Personenkraftfahrzeugs. Das Frontendmodul 12 ist nicht Bestandteil der Karosserie, sondern ein Anbauteil, welches im Rahmen der Herstellung des Personenkraftfahrzeugs an die Karosserie gefügt wird. Vorliegend wird das Frontendmodul 12 in eine Fügerichtung mit der Vorderwagenstruktur 1 und dem Achsträger 9 gefügt, wobei diese Fügerichtung in Fahrzeuglängsrichtung (x-Richtung) verläuft. Beispielsweise wird das Frontendmodul 12 an wenigstens einer ersten Fügestelle mit dem jeweiligen oberen Längsträgerelement 6 gefügt. An wenigstens einer jeweiligen zweiten Fügestelle wird das Frontendmodul 12 mit den jeweiligen Längsträgern 7 (Motorträger) gefügt, und an wenigstens einer jeweiligen dritten Fügestelle wird das Frontendmodul 12 mit dem jeweiligen unteren Längsträgerelement 10 gefügt.

Das Frontendmodul 12 umfasst dabei beispielsweise ein Kühlmodul 13 zum Kühlen des Antriebsaggregats. Ferner umfasst das Frontendmodul 12 einen Querträger 14 eines Stoßfängers. Im fertig hergestellten Zustand des Personenkraftfahrzeugs erstreckt sich der Querträger 14 zumindest im Wesentlichen in Fahrzeugquerrichtung, wobei der Querträger 14 auch als Biegequerträger bezeichnet wird. Der genannte Stoßfänger umfasst dabei wenigstens ein Verkleidungselement, welches auch als Stoßfängerverkleidung bezeichnet wird. Mittels der Stoßfängerverkleidung ist der Biegequerträger (Querträger 14) im fertig hergestellten Zustand des Personenkraftfahrzeugs nach außen hin verkleidet.

Beispielsweise ist der Querträger 14 über jeweilige Energieabsorptionselemente an den Längsträgerelementen 7 gehalten. Beispielsweise bei einer Frontalkollision des Personenkraftfahrzeugs mit einem Unfallpartner oder einem Hindernis wirken unfallbedingte Lasten beziehungsweise Unfallenergie auf den Querträger 14, sodass es zu einer unfallbedingten Kraftbeaufschlagung des Querträgers 14 kommt. Die Unfallenergie wird beispielsweise mittels des Querträgers 14 in Fahrzeugquerrichtung verteilt und auf die Energieabsorptionselemente abgeleitet. Da die Energieabsorptionselemente beispielsweise in Fahrzeuglängsrichtung nach hinten hin an den Längsträgerelementen 7 abgestützt sind, werden die Energieabsorptionselemente durch die unfallbedingte Kraftbeaufschlagung verformt. Hierdurch wandeln die Energieabsorptionselemente zumindest einen Teil der Unfallenergie in Verformungsenergie um, sodass mittels der Energieabsorptionselemente Unfallenergie absorbiert beziehungsweise abgebaut wird. Dadurch können Insassen des Personenkraftfahrzeugs geschützt werden.

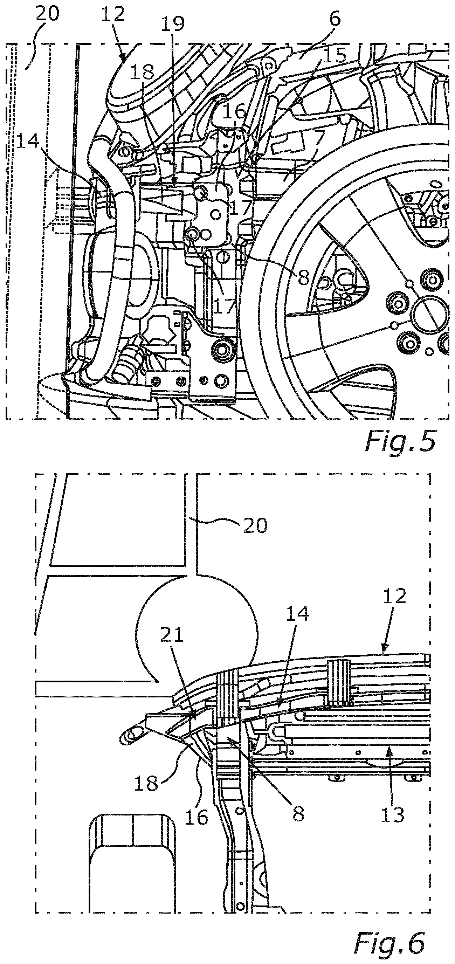

Um nun ein besonders vorteilhaftes Unfallverhalten des Personenkraftfahrzeugs, insbesondere bei einer Frontalkollision mit geringer Breitenüberdeckung, zu realisieren, umfasst das Personenkraftfahrzeug eine Abstützeinrichtung. Dabei sind zumindest die Längsträgerelemente 6, 7 und 10 sowie die Karosseriebauteile 8 und der Querträger 14 Bestandteile dieser Abstützeinrichtung. Ferner umfasst die Abstützeinrichtung - wie aus Fig. 5 erkennbar ist - jeweilige, an den jeweiligen Karosseriebauteilen 8 auf einer jeweiligen, in Fahrzeugquerrichtung nach außen weisenden Seite 15 des jeweiligen Karosseriebauteils 8 vorgesehene, erste Abstützelemente 16, von denen in Fig. 5, 6 und 7 das bezogen auf die Vorwärtsfahrtrichtung linke, am linken Karosseriebauteil 8 vorgesehene Abstützelement 16 erkennbar ist. Vorliegend ist das jeweilige erste Abstützelement 16 als separat vom jeweiligen Karosseriebauteil 8 ausgebildetes und am Karosseriebauteil 8 befestigtes Bauelement ausgebildet. Alternativ dazu ist es denkbar, dass das jeweilige erste Abstützelement 16 einstückig mit dem jeweiligen Karosseriebauteil 8 ausgebildet ist.

Vorliegend jedoch ist das erste Abstützelement 16 ein Anbauteil, welches an der in Fahrzeugquerrichtung nach außen weisenden Seite 15 des Karosseriebauteils 8 angeordnet und abgestützt ist. Dabei ist das erste Abstützelement 16 derart am Karosseriebauteil 8 gehalten, dass das erste Abstützelement 16 mit dem korrespondierenden Karosseriebauteil 8 verschraubt ist. Hierzu sind Schraubelemente in Form von Schrauben 17 vorgesehen, mittels welchen das Abstützelement 16 mit dem Karosseriebauteil 8 verschraubt ist. Ferner ist das jeweilige erste Abstützelement 16 aus einem metallischen Werkstoff gebildet.

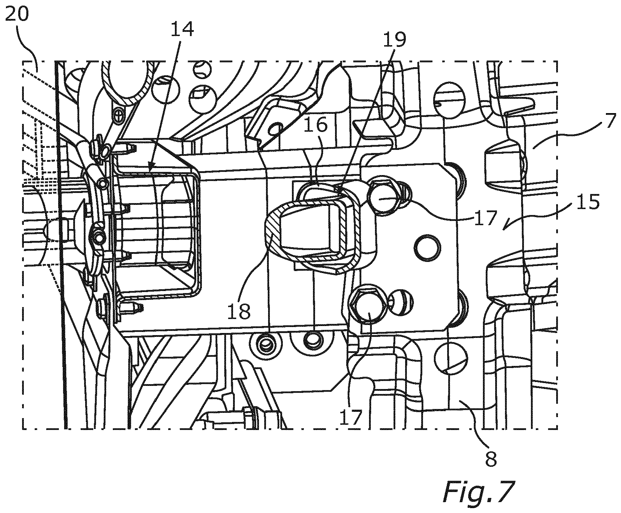

Die Abstützeinrichtung umfasst ferner je erstem Abstützelement 16 ein damit korrespondierendes, in Fahrzeugquerrichtung außerhalb des jeweiligen Karosseriebauteils 8 angeordnetes und am Querträger 14 vorgesehenes, zweites Abstützelement 18, welches sich von dem Querträger 14 nach hinten in Richtung des in Fahrzeuglängsrichtung hinter dem Querträger 14 angeordneten ersten Abstützelement 16 erstreckt. Das jeweilige zweite Abstützelement 18 ist somit Bestandteil des Frontendmoduls 12 und wird mit diesem gefügt. Das jeweilige zweite Abstützelement 18 ist in einem Ausgangszustand der Abstützeinrichtung von dem jeweils korrespondierenden ersten Abstützelement 16 beabstandet und infolge einer entsprechenden unfallbedingten Kraftbeaufschlagung zumindest teilweise in eine besonders gut aus Fig. 5 und 7 erkennbare Aufnahme 19 des ersten Abstützelements 16 bewegbar. Vorliegend ist das jeweilige zweite Abstützelement 18 als separat von dem Querträger 14 ausgebildetes und am Querträger 14 befestigtes Bauelement ausgebildet. Alternativ dazu ist es denkbar, dass das jeweilige zweite Abstützelement 18 einstückig mit dem Querträger 14 ausgebildet ist.

Die Abstützelemente 16 und 18 sind vorliegend aus einem metallischen Werkstoff, insbesondere Stahl, gebildet. Wie aus Fig. 7 erkennbar ist, sind die Abstützelemente 16 und 18 jeweils als Hohlprofil ausgebildet, um eine hinreichende Steifigkeit und somit Abstützfunktion realisieren zu können.

Fig. 5, 6 und 7 zeigen die Abstützeinrichtung in einem unverformten Zustand, welcher dem zuvor genannten Ausgangszustand entspricht. Dabei weist das jeweilige erste Abstützelement 16 die Aufnahme 19 auf, in welcher bereits im Ausgangszustand beziehungsweise unverformten Zustand ein erster Längenbereich des zweiten Abstützelements 18 angeordnet beziehungsweise aufgenommen ist. Dabei ist jedoch das zweite Abstützelement 18 vom ersten Abstützelement 16 beabstandet, sodass das zweite Abstützelement 18 nicht am ersten Abstützelement 16 abgestützt ist.

In Fig. 5 bis 7 ist ausschnittsweise ein Hindernis 20 erkennbar, mit welchem das Personenkraftfahrzeug beispielsweise im Rahmen eines Unfalltests frontal kollidiert. Besonders gut aus Fig. 6 ist erkennbar, dass bei dieser Frontalkollision ein nur sehr geringer Teil der sich in Fahrzeugquerrichtung erstreckenden Breite des Personenkraftfahrzeugs in Fahrzeuglängsrichtung nach vorne hin durch das Hindernis 20 überdeckt ist, sodass das Personenkraftfahrzeug vorliegend im Rahmen eines sogenannten Small-Overlap-Crashes, das heißt einer Frontalkollision mit geringer Breitenüberdeckung, mit dem Hindernis 20 kollidiert. Ferner ist besonders gut aus Fig. 6 erkennbar, dass der Querträger 14 die jeweiligen, seitlichen Karosseriebauteile 8 in Fahrzeugquerrichtung nach außen hin überragt, sodass zumindest ein jeweiliger, seitlicher Längenbereich 21 des Querträgers 14 in Fahrzeugquerrichtung außerhalb des Karosseriebauteils 8 angeordnet ist. Dabei ist das jeweilige zweite Abstützelement 18 in diesem äußeren, seitlichen Längenbereich 21 angeordnet.

In Fig. 5 und 6 ist besonders gut erkennbar, dass sich an den im Ausgangszustand in der Aufnahme 19 aufgenommenen ersten Längenbereich des jeweiligen zweiten Abstützelements 18 in Längserstreckungsrichtung des zweiten Abstützelements 18 ein zweiter Längenbereich anschließt, welcher in dem Ausgangszustand außerhalb der Aufnahme 19 angeordnet ist. Ferner erstreckt sich das zweite Abstützelement 18 in Fahrzeugquerrichtung von vorne außen nach hinten innen, sodass ein dem Querträger 14 zugewandtes erstes Ende des Abstützelements 18 in Fahrzeugquerrichtung weiter außen angeordnet ist als ein hinteres, dem ersten Abstützelement 16 zugewandtes zweites Ende des Abstützelements 18. Ferner erstreckt sich auch das erste Abstützelement 16 schräg zur Fahrzeuglängsrichtung und ist dabei als sogenannte Tulpe ausgebildet, in welcher der erste Längenbereich des zweiten Abstützelements 18 bereits im Ausgangszustand aufgenommen ist.

Kommt es nun zu der in Fig. 6 veranschaulichten Frontalkollision des Personenkraftfahrzeugs und insbesondere der Abstützeinrichtung mit dem Hindernis 20, so kommt es zu einer unfallbedingten Kraftbeaufschlagung der Abstützeinrichtung und insbesondere des Querträgers 14.

Überschreitet diese unfallbedingte Kraftbeaufschlagung ein vorgebbares Lastniveau, welches beispielsweise durch entsprechende Ausgestaltung der Abstützeinrichtung vorgebbar ist und wobei die Kraftbeaufschlagung von der Geschwindigkeit abhängt, mit welcher das Personenkraftfahrzeug mit dem Hindernis 20 kollidiert, so kommt es infolge der unfallbedingten Kraftbeaufschlagung zu einer unfallbedingten Rückverlagerung des Querträgers 14 und somit des zweiten Abstützelements 18, wobei sich insbesondere der Längenbereich 21 und mit diesem das im Längenbereich 21 am Querträger 14 angeordnete Abstützelement 18 nach hinten und insbesondere in Richtung des ersten Abstützelements 16 bewegen. Durch diese unfallbedingte Bewegung wird der zunächst vorgesehene Abstand zwischen den Abstützelementen 16 und 18 aufgehoben, sodass das zweite Abstützelement 18 in Abstützung mit dem ersten Abstützelement 16 kommt. Dabei verkeilen sich die Abstützelemente 16 und 18, woraus eine Querkraftkomponente resultiert. Diese Querkraftkomponente wirkt in Fahrzeugquerrichtung beispielsweise von dem in Fig. 6 erkennbaren linken Abstützelement 16 zu dem in Fig. 6 nicht erkennbaren rechten Abstützelement. Diese Querkraftkomponente bewirkt eine Drehung des Personenkraftfahrzeugs insbesondere um die Fahrzeughochrichtung, wodurch das Personenkraftfahrzeug zum Schutz seiner Insassen um das Hindernis 20 gedreht wird. Das Personenkraftfahrzeug gleitet somit nicht über die Abstützeinrichtung am Hindernis 20 ab, sondern wird um das Hindernis 20 gedreht.

Hierdurch kann insbesondere bei einem Small-Overlap-Crash und bei einem Oblique-Crash ein vorteilhaftes Unfallverhalten des Personenkraftfahrzeugs realisiert werden. Da die Abstützelemente 16 und 18 im Ausgangszustand jedoch voneinander beabstandet sind, werden andere Unfallsituationen wie beispielsweise eine Frontalkollision mit hoher oder voller Breitenüberdeckung nicht durch die Abstützelemente 16 und 18 beeinträchtigt, sodass auch bei anderen Unfallsituationen ein vorteilhaftes Unfallverhalten des Personenkraftfahrzeugs realisiert werden kann.

### Bezugszeichenliste

- 1: Vorderwagenstruktur
- 2: Trennwand
- 3: Motorraum
- 4: Windschutzscheiben-Querträger
- 5: Domelement
- 6: Längsträgerelement
- 7: Längsträgerelement
- 8: Karosseriebauteil
- 9: Vorderachsträger
- 10: Längsträgerelement
- 11: Richtungspfeil
- 12: Frontendmodul
- 13: Kühlmodul
- 14: Querträger
- 15: Seite
- 16: erstes Abstützelement
- 17: Schraube
- 18: zweites Abstützelement
- 19: Aufnahme
- 20: Hindernis
- 21: Längenbereich

## Patentansprüche

1. Abstützeinrichtung für einen Vorderwagen eines Personenkraftfahrzeugs, mit wenigstens einem sich in Fahrzeughochrichtung erstreckenden Karosseriebauteil (8), über welches jeweilige, seitlich zugeordnete Längsträgerelemente (6, 7, 10) entsprechender Längsträgerebenen miteinander verbunden sind, mit einem Querträger (14) eines an der Karosserie des Personenkraftfahrzeugs gehaltenen Frontendmoduls (12), mit wenigstens einem am Karosseriebauteil (8) auf einer in Fahrzeugquerrichtung nach außen weisenden Seite (15) vorgesehenen und eine Aufnahme (19) aufweisenden, ersten Abstützelement (16) und mit zumindest einem in Fahrzeugquerrichtung außerhalb des Karosseriebauteils (8) angeordneten, am Querträger (14) vorgesehenen und sich von dem Querträger (14) nach hinten erstreckenden, zweiten Abstützelement (18), welches in einem Ausgangszustand der Abstützeinrichtung von dem ersten Abstützelement (16) beabstandet und infolge einer entsprechenden unfallbedingten Kraftbeaufschlagung zumindest teilweise in die Aufnahme (19) und dadurch in Abstützung mit dem ersten Abstützelement (16) bewegbar ist, wobei das zweite Abstützelement (18) einen in dem Ausgangszustand in der Aufnahme (19) angeordneten ersten Längenbereich und einen sich an den ersten Längenbereich anschließenden und in dem Ausgangszustand außerhalb der Aufnahme (19) angeordneten zweiten Längenbereich aufweist, welcher infolge der unfallbedingten Kraftbeaufschlagung in die Aufnahme (19) bewegbar ist.

2. Abstützeinrichtung nach Anspruch 1, **dadurch gekennzeichnet, dass** sich das zweite Abstützelement (18) in Fahrzeuglängsrichtung von vorne außen nach hinten innen erstreckt.

3. Abstützeinrichtung nach Anspruch 1 oder 2, **dadurch gekennzeichnet, dass** sich das erste Abstützelement (16) schräg zur Fahrzeuglängsrichtung erstreckt.

4. Abstützeinrichtung nach einem der vorhergehenden Ansprüche, **dadurch gekennzeichnet, dass** das erste Abstützelement (16) einstückig mit dem Karosseriebauteil (8) ausgebildet ist.

5. Abstützeinrichtung nach einem der Ansprüche 1 bis 3, **dadurch gekennzeichnet, dass** das erste Abstützelement (16) als separat von dem Karosseriebauteil (18) ausgebildetes und am Karosseriebauteil (8) befestigtes Bauelement ausgebildet ist.

6. Abstützeinrichtung nach einem der vorhergehenden Ansprüche, **dadurch gekennzeichnet, dass** das zweite Abstützelement (18) einstückig mit dem Querträger (14) ausgebildet ist.

7. Abstützeinrichtung nach einem der Ansprüche 1 bis 5, **dadurch gekennzeichnet, dass** das zweite Abstützelement (18) als separat von dem Querträger (14) ausgebildetes und am Querträger (14) befestigtes Bauelement ausgebildet ist.

8. Abstützeinrichtung nach einem der vorhergehenden Ansprüche, **dadurch gekennzeichnet, dass** wenigstens eines der Abstützelemente (16, 18) als Hohlprofil ausgebildet ist.

9. Personenkraftfahrzeug mit wenigstens einer Abstützeinrichtung nach einem der vorhergehenden Ansprüche.

## Claims

1. A supporting means for a front end of a passenger motor vehicle, with at least one vehicle body component (8) extending in the vertical direction of the vehicle, by way of which component respective, laterally associated, side-member elements (6, 7, 10) of corresponding side-member planes are connected together, with a cross member (14) of a front end module (12) held on the vehicle body of the passenger motor vehicle, with at least a first supporting element (16) which is provided on the body component (8) on a side (15) facing outwards in the transverse direction of the vehicle and has a receptacle (19), and with at least a second supporting element (18) which is arranged in the transverse direction of the vehicle outside the body component (8), is provided on the cross member (14) and extends backwards from the cross member (14), which second element in an initial state of the supporting means is spaced apart from the first supporting element (16) and as a result of a corresponding application of force caused by an accident is movable at least partially into the receptacle (19) and thereby into support with the first supporting element (16), wherein the second supporting element (18) has a first length region arranged in the initial state in the receptacle (19) and a second length region adjoining the first length region and arranged in the initial state outside the receptacle (19), which region as a result of the application of force caused by an accident is movable into the receptacle (19).

2. A supporting means according to Claim 1, **characterised in that** the second supporting element (18) extends in the longitudinal direction of the vehicle from the outside front towards the inside rear.

3. A supporting means according to Claim 1 or 2, **characterised in that** the first supporting element (16) extends obliquely to the longitudinal direction of the vehicle.

4. A supporting means according to one of the preceding claims, **characterised in that** the first supporting element (16) is formed in one piece with the body component (8).

5. A supporting means according to one of Claims 1 to 3, **characterised in that** the first supporting element (16) is formed as a structural element formed separately from the body component (18) and fastened to the body component (8).

6. A supporting means according to one of the preceding claims, **characterised in that** the second supporting element (18) is formed in one piece with the cross member (14).

7. A supporting means according to one of Claims 1 to 5, **characterised in that** the second supporting element (18) is formed as a component formed separately from the cross member (14) and fastened to the cross member (14).

8. A supporting means according to one of the preceding claims, **characterised in that** at least one of the supporting elements (16, 18) is formed as a hollow profile.

9. A passenger motor vehicle with at least one supporting means according to one of the preceding claims.

## Revendications

1. Dispositif d'appui destiné au train avant d'un véhicule automobile de tourisme comportant au moins un composant de carrosserie (8) s'étendant dans la direction de la hauteur du véhicule par l'intermédiaire duquel des plans de support longitudinaux respectifs correspondant à des éléments de longerons associés latéraux (6, 7, 10) sont reliés entre eux, une traverse (14) d'un module avant (12) maintenu sur la carrosserie du véhicule automobile de tourisme, au moins un premier élément d'appui (16) prévu sur le composant de carrosserie (8) sur le côté (15) pointant vers l'extérieur dans la direction transversale du véhicule et comportant un évidement (19), et au moins un second élément d'appui (18) installé à l'extérieur du composant de carrosserie (8) dans la direction transversale du véhicule prévu sur la traverse (14) et s'étendant vers l'arrière à partir de la traverse (14), qui, lorsque le dispositif d'appui est à l'état initial est situé à distance du premier élément d'appui (16) et suite à une sollicitation par une force conditionnée par un accident correspondante, peut être au moins partiellement déplacé dans l'évidement (19) et ainsi en appui avec le premier élément d'appui (16), le second élément d'appui (18) ayant une première zone de longueur située dans l'évidement (19) à l'état initial et une seconde zone de longueur se raccordant à la première zone de longueur située à l'état initial à l'extérieur de l'évidement (19), et qui, suite à une sollicitation par une force conditionnée par un accident peut être déplacée dans l'évidement (19).

2. Dispositif d'appui conforme à la revendication 1,
**caractérisé en ce que**
le second élément d'appui (18) s'étend de l'extérieur à l'avant vers l'intérieur à l'arrière dans la direction longitudinale du véhicule.

3. Dispositif d'appui conforme à la revendication 1 ou 2,
**caractérisé en ce que**
le premier élément d'appui (16) s'étend obliquement par rapport à la direction longitudinale du véhicule.

4. Dispositif d'appui conforme à l'une des revendications précédentes,
**caractérisé en ce que**
le premier élément d'appui (16) est réalisé en une seule pièce avec le composant de carrosserie (8).

5. Dispositif d'appui conforme à l'une des revendications 1 à 3,
**caractérisé en ce que**
le premier élément d'appui (16) est réalisé sous la forme d'un composant réalisé séparément du composant de carrosserie (8) et fixé sur ce composant de carrosserie (18).

6. Dispositif d'appui conforme à l'une des revendications précédentes,
**caractérisé en ce que**
le second élément d'appui (18) est réalisé en une seule pièce avec la traverse (14).

7. Dispositif d'appui conforme à l'une des revendications 1 à 5,
**caractérisé en ce que**
le second élément d'appui (18) est réalisé sous la forme d'un composant séparé de la traverse (14) et fixé à cette traverse (14).

8. Dispositif d'appui conforme à l'une des revendications précédentes,
**caractérisé en ce qu'**
au moins l'un des éléments d'appui (16, 18) est réalisé sous la forme d'un profilé creux.

9. Véhicule automobile de tourisme comportant au moins un dispositif d'appui conforme à l'une des revendications précédentes.
